Europäisches Patentamt

European Patent Office

Office européen des brevets

(19)

(11) **EP 1 449 317 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **02774228.7**

(22) Anmeldetag: **25.10.2002**

(51) Int Cl.:
*H04J 3/06* (2006.01)   *G06F 1/14* (2006.01)

(86) Internationale Anmeldenummer:
**PCT/CH2002/000580**

(87) Internationale Veröffentlichungsnummer:
**WO 2003/047134 (05.06.2003 Gazette 2003/23)**

(54) **VERFAHREN ZUR SYNCHRONISATION IN NETZWERKEN**

METHOD FOR SYNCHRONIZATION IN NETWORKS

PROCEDE DE SYNCHRONISATION DANS DES RESEAUX

(84) Benannte Vertragsstaaten:
**AT BE BG CH CY CZ DE DK EE ES FI FR GB GR IE IT LI LU MC NL PT SE SK TR**

(30) Priorität: **28.11.2001 CH 218801**

(43) Veröffentlichungstag der Anmeldung:
**25.08.2004 Patentblatt 2004/35**

(73) Patentinhaber: **Bridgeco AG**
**8600 Duebendorf (CH)**

(72) Erfinder:
- **BLUM, Philipp**
  **CH-8003 Zürich (CH)**
- **DICKMANN, Georg**
  **CH-8600 Dübendorf (CH)**

(74) Vertreter: **Heinen, Detlef et al**
**c/o A.Braun Braun Héritier Eschmann AG,**
**Holbeinstrasse 36-38**
**4051 Basel (CH)**

(56) Entgegenhaltungen:
| | |
|---|---|
| **EP-A- 0 389 780** | **EP-A- 0 722 233** |
| **WO-A-00/48367** | **DE-A- 19 815 647** |
| **US-A- 5 689 688** | **US-A- 5 923 220** |

- **LAMPORT L: "TIME, CLOCKS, AND THE ORDERING OF EVENTS IN A DISTRIBUTED SYSTEM" COMMUNICATIONS OF THE ASSOCIATION FOR COMPUTING MACHINERY, ASSOCIATION FOR COMPUTING MACHINERY. NEW YORK, US, Bd. 21, Nr. 7, 1. Juli 1978 (1978-07-01), Seiten 558-565, XP000615783 ISSN: 0001-0782**
- **N.N.: "CLOCK DISTRIBUTION ALGORTIHM FOR SYNCHRONIZATION NETWORK" IBM TECHNICAL DISCLOSURE BULLETIN, IBM CORP. NEW YORK, US, Bd. 32, Nr. 8A, 1990, Seiten 17-20, XP000082683 ISSN: 0018-8689**

## Beschreibung

Die Erfindung betrifft ein Verfahren zur Synchronisation in Netzwerken gemäss dem Oberbegriff des unabhängigen Patentanspruchs.

Zahlreiche Anwendungen machen Gebrauch von in Netzwerken verteilten Rechnerressourcen (Knoten), z.B. um die Leistungsfähigkeit und/oder die Fehlertoleranz zu verbessern. In einigen dieser Anwendungen ist es erforderlich, eine gemeinsame zeitliche Basis für alle angeschlossenen Rechnerressourcen zu haben, beispielsweise um verschiedene Ereignisse (z.B. das Aussenden von Schall an verschiedenen Orten zur Erzielung des Stereoeffekts) zu koordinieren. Zu diesem Zweck muss eine (mehr oder weniger genaue) Synchronisation der lokalen Zeit an den verschiedenen Knoten erfolgen.

Die Knoten kommunizieren dabei über Zeitnachrichten, die über ein Kommunikationsnetzwerk transportiert werden. Dabei kann das zwischen zwei bestimmten Knoten liegende Kommunikationsnetzwerk durchaus mehrere Arten von Netzen umfassen, die miteinander verbunden sind.

In einem Kommunikationsnetzwerk erfolgt die Nachrichtenübertragung typischerweise mit Hilfe von Nachrichten, die über das Netzwerk transportiert werden. Dabei können - je nach Art des Netzwerks und je nach Verkehr auf dem Netzwerk - unterschiedliche Zeitverzögerungen beim Transport solcher Nachrichten auftreten. Diese Variabilität der Zeitverzögerungen beim Transport von Nachrichten begrenzt aber die mögliche Synchronisation der lokalen Zeit an den verschiedenen Knoten.

Zur Synchronisation der lokalen Zeit an den verschiedenen Knoten sind bereits verschiedene Verfahren vorgeschlagen worden. Quasi als Standardverfahren in Nachrichtennetzen hat sich das "Network Time Protocol" NTP (RFC 1305, RFC 2030) durchgesesetzt. Dieses Verfahren erlaubt es, mittels umlaufender Nachrichten von einem Knoten zu verschiedenen Referenzknoten und wieder zurück denjenigen Referenzknoten, mit dem die beste Verbindung besteht (kürzeste Laufzeiten), für eine Aktualisierung der eigenen lokalen Uhr auszuwählen. Allerdings werden für dieses Verfahren in der Regel mehrere Referenzknoten benötigt, und mit einer geringeren Anzahl von Zeitnachrichten wird auch eine weniger genaue Synchronisation erreicht.

Weiter offenbart die WO 00 48367 A ein anpassungsfähiges Kommunikationsprotokoll für kabellose Netzwerke. Darin ist ein Verfahren zum automatischen dynamischen Aufbau und Betrieb eines (Funk-)Netzwerkes gezeigt, bei dem unter anderem auch die Netzwerkzeit synchronisiert wird. Bei dieser Synchronisation wird die lokale Zeit an den Knoten des Netzwerkes aktualisiert, indem aus der empfangenen Zeitnachricht eines sendenden Knotens eine Vergleichszeit berechnet wird, mit der die lokale Zeit des empfangenden Knotens aktualisiert wird, falls die Vergleichszeit jünger (in WO 00 48367 A "älter" genannt) ist als die lokale Zeit des empfangenden Knotens. Dabei wird die Netzwerkzeit jeweils auf die Zeit desjenigen Knotens mit der schnellsten lokalen Uhr eingestellt, d.h. die einzelnen Knoten übernehmen jeweils diese Zeit als Netzwerkzeit.

In der US-A-5 689 688 ist ein System gezeigt, welches mit Änderungen an lokalen Uhren der Knoten die Synchronisationsgenauigkeit verbessert, indem an den Knoten "Round-Trip"-Zeiten gemessen werden, mit denen jeder eintreffenden Zeitnachricht eine Güte zugewiesen werden kann. Eine Auswertung dieser Güte nach gewissen Kriterien bestimmt dann, ob die lokale Uhr angepasst wird oder nicht.

Weiterhin sind z.B. in "Probabilistic Clock Synchronization", Distributed Computing, vol. 4, No. 3, pp. 146-158, 1989 (Cristian, F.) sowie in "A Decentralized High Performance Time Service Architecture", (Dolev, D; Reischuk, R.; Strong, R.; Wimmers,E.:), 1995, bereits sogenannte probabilistische Synchronisationsverfahren vorgeschlagen worden. Von einer Anzahl von Zeitnachrichten von einer Referenzuhr wählen die Knoten die beste aus, um ihre lokale Zeit jeweils einzustellen bzw. anzupassen. Diese Auswahl der jeweils besten Zeitnachrichten von der Referenzuhr ist deshalb möglich, weil die einzelnen Knoten wiederholt umlaufende Nachrichten aussenden und wieder empfangen, und dadurch die Referenzuhr abfragen. Aufgrund der Laufzeit dieser umlaufenden Nachrichten wissen dann die verschiedenen Knoten, welche der Zeitnachrichten von der Referenzuhr die besten sind (z.B. solche Zeitnachrichten von der Referenzuhr, die kurze Zeit später eintreffen als eine umlaufende Nachricht mit sehr kurzer Umlaufzeit).

Nachteilig an diesen Verfahren ist, dass die verschiedenen Knoten immer wieder umlaufende Nachrichten senden, empfangen und auswerten müssen, um beurteilen zu können, welche der Zeitnachrichten von der Referenzuhr die besten sind. Diese umlaufenden Nachrichten belasten zum einen den Verkehr auf dem Netz, da jeder zu synchronisierende Knoten eigene umlaufende Nachrichten generiert. Ausserdem kennt der jeweilige Knoten immer nur die Gesamtlaufzeit einer umlaufenden - also von ihm ausgesandten und wieder empfangenen - Nachricht, er kann also nicht sagen, ob die Nachricht z.B. besonders lange auf dem Hinweg zu einem bestimmten Knoten oder auf dem Rückweg von diesem Knoten durch das Netzwerk unterwegs war. Insofern kann auch die Genauigkeit der Synchronisation nicht beliebig hoch sein, weil immer nur die Gesamtlaufzeit einer umlaufenden Nachricht als Auswahl-Kriterium für die Synchronisation der lokalen Zeit an den Knoten zur Verfügung steht. Schliesslich kann es - speziell bei viel Verkehr auf dem Netz - sein, dass die Gesamtlaufzeit einer umlaufenden Nachricht über einen längeren Zeitraum hinweg nicht ausreichend klein ist und in der Folge über diesen Zeitraum hinweg an den verschiedenen Knoten keine oder keine besonders genaue Synchronisation der lokalen Zeit mit der Referenzzeit erfolgen kann.

Bei einem anderen probabilistischen Verfahren, das z.B. in "Probabilistic Clock Synchronization in Distributed Systems" (Arvind, K.), IEEE Trans. Parallel and Distributed Systems, vol. 5, No. 5, pp. 474-487, May 1994, beschrieben ist, werden nur Zeitnachrichten verwendet, die in einer Richtung durch das Netzwerk transportiert werden, es werden nämlich nur Zeitnachrichten zu den verschiedenen Knoten transportiert, die die verschiedenen Knoten über die Referenzzeit unterrichten. Umlaufende Nachrichten von den Knoten werden hier nicht generiert. Nachteilig an diesem Verfahren ist, dass sämtliche Zeitnachrichten, die die verschiedenen Knoten über die Referenzzeit unterrichten, von den Knoten zur Synchronisation der lokalen Zeit verwendet werden, egal ob sie nun vergleichsweise lange oder kurz im Netz unterwegs waren, und nicht nur die besten Zeitnachrichten wie bei dem weiter oben beschriebenen Verfahren. Es erfolgt also keine Selektion der Zeitnachrichten, die für die Synchronisation der lokalen Zeit genutzt werden. Andererseits wird der Verkehr auf dem Netz durch dieses Verfahren weniger belastet. Ein Vorteil der unidirektionalen Versendung von Zeitnachrichten liegt auch darin, dass sie als "broadcast" verschickt werden können, d.h. dass lediglich eine einzige Nachricht verschickt werden muss, welche von allen empfangenden Knoten empfangen wird.

Eine sehr genaue Synchronisation der lokalen Zeit an den verschiedenen Knoten kann über "GPS (Global Positioning System) / Time Service" erfolgen. Die Synchronisation mittels GPS ist sehr genau, jedoch wird eine separate Infrastruktur für die Synchronisation an jedem Knoten benötigt, was sowohl von der technischen Seite (zusätzliche Ausrüstung an jedem Knoten) als auch von der Kostenseite her aufwändig ist. Ausserdem ist die Nutzung von GPS innerhalb von grossen Gebäuden auch nur sehr beschränkt möglich, weil die zusätzliche technische Ausrüstung häufig jeweils nur auf dem Dach angebracht werden kann und von dort die Signale dann weiter im Gebäude verteilt werden müssen.

Im Lichte dieses Standes der Technik ist es eine Aufgabe der Erfindung, ein einfaches und gleichzeitig zuverlässiges und qualitativ hochstehendes Verfahren zur Synchronisation vorzuschlagen.

Diese Aufgabe wird durch das erfindungsgemässe Verfahren, wie es durch die Merkmale des unabhängigen Patentanspruchs charakterisiert ist, gelöst. Besonders vorteilhafte Verfahrensvarianten ergeben sich aus den Merkmalen der abhängigen Patentansprüche.

Insbesondere wird bei dem erfindungsgemässen Verfahren an verschiedenen Knoten im Netzwerk die an dem jeweiligen Knoten gültige lokale Zeit aktualisiert, wobei von einem als übergeordneter Knoten ("master") fungierenden Knoten regelmässig Zeitnachrichten an einen als untergeordneter Knoten ("slave") fungierenden Knoten gesendet werden. Der untergeordnete Knoten ("slave") empfängt die von dem übergeordneten Knoten ("master") ausgesandten Zeitnachrichten und wertet diese Zeitnachrichten für die Aktualisierung seiner lokalen Zeit aus. Zu diesem Zweck wird eine Mindestlaufzeit für eine Zeitnachricht zwischen einem übergeordneten Knoten ("master") und einem untergeordneten Knoten ("slave") festgelegt. Der untergeordnete Knoten ("slave") liest beim Empfang einer Zeitnachricht die in der vom übergeordneten Knoten ("master") gesendeten Zeitnachricht enthaltene lokale Zeit des übergeordneten Knotens ("master") aus und addiert zu dieser lokalen Zeit des übergeordneten Knotens ("master") die festgelegte Mindestlaufzeit hinzu. Somit wird von dem untergeordneten Knoten ("slave") eine Vergleichszeit (ein "Abbild" der Referenz) generiert, und die auf diese Weise generierte Vergleichszeit wird dann mit der eigenen lokalen Zeit verglichen. In demjenigen Falle, in welchem die Vergleichszeit älter ist als die eigene lokale Zeit erfolgt keine Aktualisierung der eigenen lokalen Zeit, hingegen in demjenigen Falle, in welchem die Vergleichszeit jünger ist als die eigene lokale Zeit, erfolgt eine Aktualisierung der eigenen lokalen Zeit. Dabei ist im Netzwerk grundsätzlich frei wählbar, welcher Knoten als übergeordneter Knoten fungieren soll und welcher Knoten als untergeordneter Knoten. Dies kann z.B. bei jeder beliebigen Anwendung neu festgelegt werden. Zeitnachrichten werden jedoch immer nur von einem als übergeordneter Knoten fungierenden Knoten verschickt.

Somit wird einerseits der Vorteil genutzt, dass Zeitnachrichten nur in einer Richtung durch das Netzwerk übertragen werden müssen, andererseits erfolgt dennoch eine Selektion derjenigen Nachrichten, die für die Synchronisation verwendet werden. Vorausgesetzt, dass die Stabilität der lokalen Uhr am untergeordneten Knoten grösser ist als die Variation der Laufzeiten von Zeitnachrichten, können aufgrund des Vergleichs der Vergleichszeit mit der Momentanzeit der lokalen Uhr am untergeordneten Knoten solche Zeitnachrichten für die Aktualisierung der lokalen Zeit ausgewählt werden, die besonders kurz unterwegs waren, bevor sie am untergeordneten Knoten angekommen und dort ausgelesen worden sind.

Bei einer Variante des erfindungsgemässen Verfahrens erfolgt die Aktualisierung der eigenen lokalen Zeit am untergeordneten Knoten derart, dass die eigene lokale Zeit am untergeordneten Knoten auf die Vergleichszeit eingestellt wird. Das heisst, dass bei solchen Zeitnachrichten, die nur eine kurze Zeit im Netzwerk unterwegs waren, die lokale Zeit am untergeordneten Knoten aktualisiert wird, und zwar wird dabei die Zeit am untergeordneten Knoten auf die Zeit des übergeordneten Knotens zuzüglich der Mindestlaufzeit (also auf das "Abbild" der Referenz) eingestellt.

Die Mindestlaufzeit einer Zeitnachricht zwischen dem übergeordneten Knoten und dem untergeordneten Knoten kann entweder vorgegeben werden, oder durch eine Laufzeitmessung am Beginn des Verfahrens ermittelt werden oder sie kann durch eine Laufzeitmessung während des Verfahrens ermittelt werden. Dennoch müssen für die gute Selektivität des Verfahrens nicht ständig die Laufzeiten im Netzwerk gemessen werden (im Falle, dass die Mindestlaufzeit vorgegeben wird, muss sie z.B. gar nicht gemessen werden), weshalb das Netzwerk auch nicht ständig durch solche Nachrichten belastet wird.

Bei einer weiteren Variante des Verfahrens ist an jedem Knoten eine eigene lokale Uhr vorgesehen, wobei die Geschwindigkeit der Uhr am untergeordneten Knoten langsamer ist als die Geschwindigkeit der lokalen Uhr am übergeordneten Knoten. Wenn nämlich die Geschwindigkeit der lokalen Uhr am untergeordneten Knoten langsamer ist als die Geschwindigkeit der Uhr am übergeordneten Knoten, dann wird bei normaler Laufzeit durch das Netzwerk immer wieder das Ereignis eintreten, dass die Vergleichszeit jünger ist als die lokale Zeit am untergeordneten Knoten. Tritt aber dieses Ereignis ein, erfolgt eine Aktualisierung der lokalen Zeit am untergeordneten Knoten.

Ist eine Aktualisierung der lokalen Zeit an einem untergeordneten Knoten erfolgt, so wird bei einer weiteren Verfahrensvariante, bei welcher die Geschwindigkeit der lokalen Uhr am untergeordenten Knoten einstellbar ist, die Geschwindigkeit der lokalen Uhr an diesem untergeordneten Knoten in Abhängigkeit von mehreren Dingen eingestellt, nämlich in Abhängigkeit von der Geschwindigkeit der lokalen Uhr vor dem Zeitpunkt der Aktualisierung der lokalen Zeit, in Abhängigkeit von dem Ausmass der Aktualisierung der lokalen Zeit, und schliesslich optional in Abhängigkeit von dem Zeitintervall, welches zwischen zwei Aktualisierungen der lokalen Zeit verstrichen ist. Auf diese Weise kann die "Historie" bei der Einstellung der Geschwindigkeit der lokalen Uhr angemessen berücksichtigt werden (wie waren die verschiedenen Geschwindigkeiten der lokalen Uhr vor einer Aktualisierung, wie stark wurde die lokale Zeit bei einer Aktualisierung verändert, in welchen Zeitabständen ist eine Aktualisierung erfolgt). Die Berücksichtigung der "Historie" ist insofern hilfreich, als sie Informationen liefert, wie man die Geschwindigkeit der lokalen Uhr am untergeordneten Knoten gut einstellt.

Bei einer weiteren Variante des erfindungsgemässen Verfahrens wird am untergeordneten Knoten ein vorgebbares Zeitintervall überwacht, welches von dem Zeitpunkt an beginnt, zu welchem die letzte Aktualisierung der lokalen Zeit des untergeordneten Knotens erfolgt ist. Für den Fall, dass dieses Zeitintervall überschritten wird, ohne dass eine Aktualisierung der lokalen Zeit am untergeordneten Knoten erfolgt, wird eine virtuelle lokale Zeit am untergeordneten Knoten erzeugt, welche der tatsächlichen lokalen Zeit am untergeordneten Knoten hinterher eilt (mit anderen Worten gesagt ist die virtuelle lokale Zeit im Prinzip repräsentativ für eine virtuelle Uhr, die langsamer voranschreitet als die tatsächliche lokale Zeit am untergeordneten Knoten). Wenn nun die Vergleichszeit jünger ist als die erzeugte virtuelle lokale Zeit am untergeordneten Knoten, erfolgt eine Aktualisierung der lokalen Zeit. Das Zeitintervall kann dabei auch null sein, mit anderen Worten gesagt, kann die virtuelle lokale Zeit am untergeordneten Knoten auch sofort erzeugt werden.

Diese Variante ist vor allen Dingen dann vorteilhaft, wenn über eine längere (vorgebbare) Zeitdauer keine Aktualisierung der lokalen Zeit am untergeordneten Knoten mehr erfolgt ist und es - aufgrund der über eine längere Zeitdauer nicht mehr erfolgten Aktualisierung - eben fraglich ist, wie gut die lokale Zeit am untergeordneten Knoten in Bezug auf die lokale Zeit am übergeordneten Knoten ist (Synchronizität). Durch die dann langsamer voranschreitende virtuelle Zeit wird nämlich provoziert, dass bald wieder eine Zeitnachricht vom übergeordneten Knoten eintrifft, aus der dann eine Vergleichszeit generiert wird, die wieder jünger ist als die virtuelle Zeit am untergeordneten Knoten. Tritt dieses Ereignis ein, so erfolgt eine Aktualisierung der lokalen Zeit am untergeordneten Knoten, wobei vorzugsweise die lokale Zeit am untergeordneten Knoten dann aktualisiert wird, indem die lokale Zeit am untergeordneten Knoten auf die Vergleichszeit eingestellt wird. Ausserdem kann man so eine sehr starke Annäherung der Geschwindigkeit der lokalen Uhr am untergeordneten Knoten an die Geschwindigkeit der lokalen Uhr am übergeordneten Knoten erreichen. Bei dieser Annäherung kann die lokale Uhr am untergeordneten Knoten zeitweise langsamer oder schneller laufen als diejenige am übergeordneten Knoten. Durch die "verlangsamte" virtuelle Zeit wird sichergestellt, dass in jedem Falle wieder ein Aktualisierungsereignis auftritt.

Bei einer weiteren Verfahrensvariante, bei der das Netzwerk mehrstufig ausgebildet ist, also mehrere Teil-Netzwerke umfasst, über die die einzelnen Knoten miteinander verbunden sind, können einzelne Knoten nur als übergeordnete Knoten fungieren, andere Knoten können nur als untergeordnete Knoten fungieren, und wieder andere Knoten können sowohl als übergeordnete Knoten als auch als untergeordnete Knoten fungieren. Die Synchronisation eines als untergeordneter Knoten fungierenden Knotens erfolgt jeweils in Bezug auf seinen übergeordneten Knoten über das dazwischen liegende Teil-Netzwerk, sie ist jedoch von einer allfälligen Synchronisation des übergeordneten Knotens in Bezug auf dessen übergeordneten Knoten "entkoppelt". Zwei vorteilhafte Varianten, wie diese Entkoppelung beispielsweise erfolgen kann, werden nachstehend ausgeführt.

Bei einer ersten Variante ist an einem Knoten, der sowohl als übergeordneter Knoten wie auch als untergeordneter Knoten fungiert, eine unabhängige lokale Uhr vorgesehen. Beim Verschicken einer Zeitnachricht dieses Knotens an einen untergeordneten Knoten wird sowohl der Momentanwert dieser unabhängigen lokalen Uhr als auch die Differenz zwischen dem Momentanwert dieser unabhängigen lokalen Uhr und der von seinem übergeordneten Knoten abgeleiteten lokalen Zeit verschickt. Am untergeordneten Knoten wird beim Empfang einer solchen Zeitnachricht einerseits aus dem in der Zeitnachricht enthaltenen Momentanwert der unabhängigen lokalen Uhr die Vergleichszeit generiert. Andererseits wird aus der Differenz zwischen dem Momentanwert dieser unabhängigen lokalen Uhr und der von seinem übergeordneten Knoten abgeleiteten lokalen Zeit ein Abbild der Referenzzeit des übergeordneten Knotens generiert.

Bei einer zweiten Variante wird beim Verschicken einer Zeitnachricht von einem übergeordneten Knoten an einen untergeordneten Knoten sowohl die Summe aller Ausmasse an Aktualisierungen seit dem Verschicken der letzten Zeitnachricht verschickt als auch die Summe aller seit dem Verschicken der letzten Zeitnachricht erfolgten Korrekturen der Geschwindigkeit, mit der die Zeit voranschreitet. Beim Empfang einer Zeitnachricht von einem übergeordneten Knoten wird am untergeordneten Knoten zunächst die lokale Zeit des untergeordneten Knotens um die in der Zeitnachricht enthaltene Summe aller Ausmasse an Aktualisierungen geändert. Ausserdem wird die Geschwindigkeit, mit der die Zeit des untergeordneten Knotens voranschreitet, um die in der Zeitnachricht enthaltene Summe aller Geschwindigkeitskorrekturen geändert, bevor am untergeordneten Knoten die Vergleichszeit generiert wird.

Weitere vorteilhafte Varianten und Aspekte ergeben sich aus der nachfolgenden Beschreibung des Verfahrens anhand der Zeichnung. In der Zeichnung zeigen in schematischer Darstellung:

Fig. 1 verschiedene Knoten, die über dazwischen liegende Netzwerke miteinander verbunden sind,

Fig. 2 eine Übersicht des Ablaufs einer Variante des erfindungsgemässen Verfahrens, stark vereinfacht und

Fig. 3 eine Darstellung des Versands mehrerer Zeitnachrichten über der Zeit an einem übergeordneten Knoten und des zugehörigen Empfangs dieser Zeitnachrichten an einem untergeordneten Knoten, sowie des zugehörigen Verlaufs der Abweichung der lokalen Zeit an dem untergeordneten Knoten gegenüber der Referenzzeit, gemäss der Verfahrensvariante aus Fig.2.

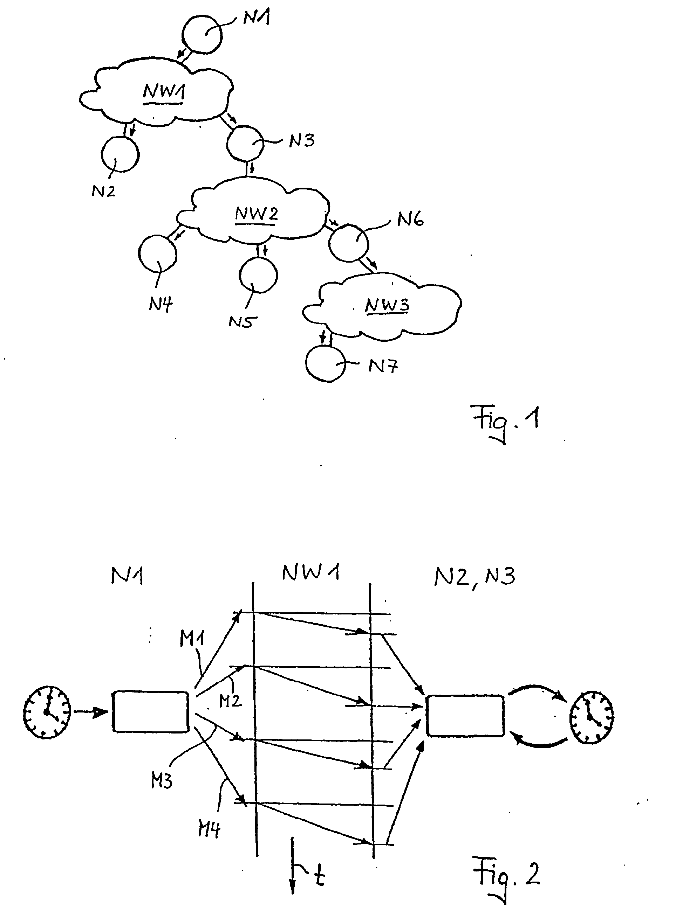

In Fig. 1 erkennt man mehrere Knoten N1,N2,N3,N4,N5,N6,N7, die über dazwischenliegende (Teil-)Netzwerke - hier die Netzwerke NW1,NW2 und NW3 - miteinander verbunden sind. Die Pfeile stellen symbolisch dar, in welcher Richtung Zeitnachrichten von einem Knoten über ein Netzwerk zu einem anderen Knoten transportiert werden.

Zunächst sollen in einem ersten Abschnitt nur die Knoten N1-N3 und das dazwischen liegende (Teil-)Netzwerk NW1 betrachtet werden. Der Knoten N1 ist in diesem betrachteten Abschnitt ein übergeordneter Knoten ("master"), der Zeitnachrichten über das Netzwerk NW1 an die untergeordneten Knoten N2 bzw. N3 ("slave") sendet.

Diese Zeitnachrichten beinhalten jeweils die lokale Zeit am übergeordneten Knoten zu demjenigen Zeitpunkt, zu dem sie abgesandt werden, wie in Fig. 2 im linken Drittel zu erkennen ist (zusätzlich können sie auch noch einen Bezug auf eine globale Referenzzeit, z.B. UTC oder GMT enthalten). Beispielhaft ist in Fig. 2 dargestellt, dass zu vier aufeinander folgenden Zeitpunkten jeweils vom übergeordneten Knoten - N1 - eine Zeitnachricht M1-M4 über das Netzwerk NW1 zu den untergeordneten Knoten - N2,N3 - gesendet wird. Dazu greift der übergeordnete Knoten N1 zu diesen Zeitpunkten jeweils auf seine lokale Zeit zu und übermittelt diese in der jeweiligen Zeitnachricht an die untergeordneten Knoten N2 bzw. N3.

Während ihres Transports über das Netzwerk NW1 erfahren die von dem übergeordneten Knoten N1 abgesandten Zeitnachrichten M1-M4 eine zeitliche Verzögerung (der Pfeil t deutet die Zeitachse an), weil der Transport über das Netzwerk NW1 eine bestimmte Zeit in Anspruch nimmt, welche von verschiedenen Faktoren abhängen kann, z.B. von der Dichte des Verkehrs auf dem Netzwerk NW1. Dies ist im mittleren Drittel von Fig. 2 erkennbar. Für die Zeit, die eine Nachricht benötigt, um vom übergeordneten Knoten N1 über das Netzwerk NW1 zum untergeordneten Knoten zu gelangen, wird eine bestimmte Mindestlaufzeit $d_{min}$ angenommen. Diese Mindestlaufzeit $d_{min}$ ist vorgebbar und kann entweder geschätzt werden, oder durch Messungen zu Beginn des noch zu erläuternden Verfahrens oder auch während des Verfahrens ermittelt werden.

Die Zeitnachrichten M1-M4 kommen zu einem Zeitpunkt an den untergeordneten Knoten N2 bzw. N3 an, der mehr oder weniger später als der Zeitpunkt des Versands der jeweiligen Zeitnachricht liegt. Der untergeordnete Knoten N2 bzw. N3 empfängt die Zeitnachrichten M1-M4 und liest die in der jeweiligen Zeitnachricht M1-M4 enthaltene lokale Zeit des übergeordneten Knotens N1 aus. Zu dieser aus der jeweiligen Zeitnachricht M1-M4 ausgelesenen Zeit wird die Mindestlaufzeit $d_{min}$ hinzu addiert (die Mindestlaufzeit $d_{min}$ kann zu jedem Knoten N2,N3 einen unterschiedlichen Wert haben), wodurch eine Vergleichszeit generiert wird. Diese Vergleichszeit wird nun am untergeordneten Knoten N2 bzw. N3 mit der eigenen lokalen Zeit verglichen, was man im rechten Drittel von Fig. 2 erkennen kann. Ist die Vergleichszeit älter als die lokale Zeit am untergeordneten Knoten (was z.B. bei längeren Laufzeiten der Zeitnachrichten M1-M4 durch das Netzwerk NW1 der Fall ist), so wird die lokale Zeit am untergeordneten Knoten N2,N3 nicht aktualisiert. Ist die Vergleichszeit hingegen jünger als die lokale Zeit am untergeordneten Knoten N2 bzw. N3 (was z.B. bei kurzen Laufzeiten der Zeitnachrichten M1-M4 durch das Netzwerk NW1 der Fall ist oder dann, wenn die lokale Zeit am untergeordneten Knoten N2 bzw. N3 entsprechend langsamer voranschreitet als die lokale Zeit am übergeordneten Knoten N1), wird die lokale Zeit am untergeordneten Knoten N2 bzw. N3 aktualisiert, und zwar vorzugsweise derart, dass die lokale Zeit am untergeordneten Knoten N2 bzw. N3 auf die Vergleichszeit gesetzt wird.

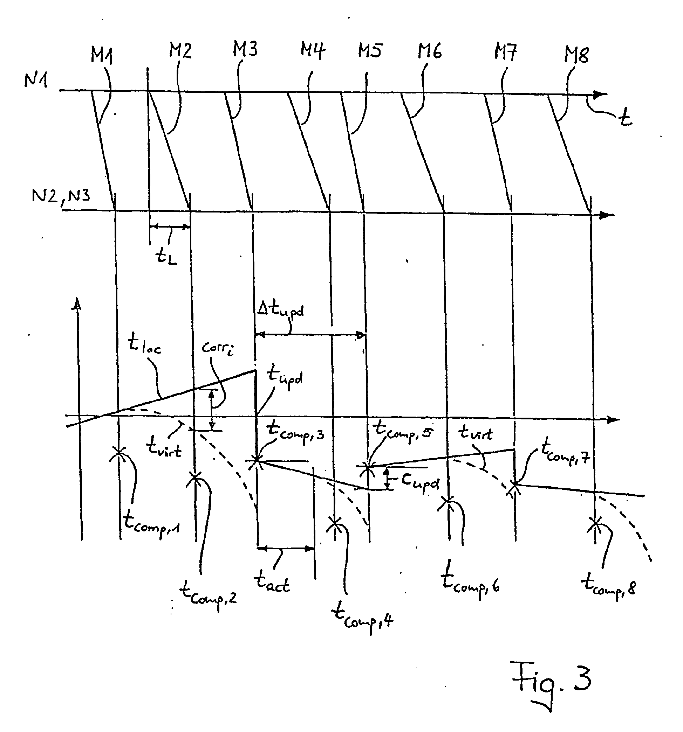

In Fig. 3 erkennt man eine Darstellung, in welcher in der oberen Hälfte der Versand mehrerer Zeitnachrichten über der Zeit an einem übergeordneten Knoten, z.B. am Knoten N1, dargestellt ist, sowie der zugehörige Empfang dieser Zeitnachrichten an einem untergeordneten Knoten, z.B. an den Knoten N2 bzw. N3. In der unteren Hälfte von Fig. 3 ist der zugehörige Verlauf der lokalen Zeit am untergeordneten Knoten, z.B. an den Knoten N2 bzw. N3, dargestellt.

In der oberen Hälfte von Fig. 3 erkennt man dabei acht verschiedene Zeitnachrichten M1-M8, die von dem übergeordneten Knoten N1 abgesandt werden und nach einer - durchaus variierenden - Laufzeit $t_L$ durch das Netzwerk am untergeordneten Knoten N2 bzw. N3 empfangen werden.

In der unteren Hälfte erkennt man den Verlauf der lokalen Zeit $t_{loc}$ am untergeordneten Knoten. Beim Empfang der ersten beiden Zeitnachrichten M1 und M2 wird aus diesen Nachrichten zunächst die in den Zeitnachrichten M1 und M2 enthaltene lokale Zeit des übergeordneten Knotens N1 ausgelesen und dazu die Mindestlaufzeit $d_{min}$ hinzu addiert und auf diese Weise die jeweilige Vergleichszeit $t_{comp,1}$ bzw. $t_{comp,2}$ gewonnen, welche durch die entsprechenden Kreuze in der unteren Hälfte von Fig. 3 repräsentiert wird. Beide Vergleichszeiten sind älter als die lokale Zeit $t_{loc}$ am untergeordneten Knoten N2 bzw. N3. Somit erfolgt keine Aktualisierung der lokalen Zeit $t_{loc}$ am untergeordneten Knoten N2 bzw. N3. Würde man nun die Zeit $t_{loc}$ (ansteigende Rampe) am untergeordneten Knoten N2 bzw. N3 mit der gleichen Geschwindigkeit weiter laufen lassen, so würde es zu überhaupt keiner Aktualisierung der lokalen Zeit $t_{loc}$ am untergeordneten Knoten N2 bzw. N3 kommen.

Damit ein solcher Fall nicht eintreten kann, wird das Zeitintervall $t_{act}$ überwacht, welches jeweils vom Zeitpunkt $t_{upd}$ der letzten Aktualisierung an beginnt. Wenn dieses Zeitintervall $t_{act}$ nun überschritten wird, ohne dass eine Aktualisierung der lokalen Zeit $t_{loc}$ am untergeordneten Knoten N2 bzw. N3 erfolgt ist, dann wird nach dem Ablauf dieser vorgebbaren Dauer eine virtuelle lokale Zeit $t_{virt}$ (gestrichelte Linie in Fig. 3) am untergeordneten Knoten N2 bzw. N3 erzeugt, die allerdings nicht die lokale Zeit darstellt, welche tatsächlich an eine am Knoten N2 bzw. N3 laufende Applikation weitergegeben wird. Auch wenn eine solche virtuelle lokale Zeit $t_{virt}$ am Knoten N2 bzw. N3 generiert wird, repräsentiert $t_{loc}$ die tatsächliche lokale Zeit am Knoten N2 bzw. N3. Die virtuelle Zeit $t_{virt}$ ergibt sich, indem man von der tatsächlichen lokalen Zeit $t_{loc}$ einen Korrekturbeitrag $corr_i$ abzieht. Ein solcher Korrekturbeitrag kann sich beispielsweise errechnen aus:

$$corr_i = (t_{loc,i} - t_{upd,j} - t_{act})^\alpha \times c_L \; ,$$

wobei

$t_{loc,i}$     die lokale Zeit am untergeordneten Knoten N2 bzw. N3 zu einem beliebigen Zeitpunkt nach Ablauf des Intervalls $t_{act}$ darstellt,

$t_{upd,j}$     den Zeitpunkt der letzten erfolgten Aktualisierung der lokalen Zeit $t_{loc}$ darstellt

$t_{act}$     das vorgebbare Zeitintervall bezeichnet, welches ab dem Zeitpunkt $t_{upd,j}$ der letzten erfolgten Aktualisierung der lokalen Zeit beginnt und innerhalb dessen die aus empfangenen Zeitnachrichten ermittelte Vergleichszeit mit $t_{loc}$ verglichen wird, wobei nach Ablauf von $t_{act}$ ohne Aktualisierung der lokalen Zeit die virtuelle Zeit $t_{virt}$ zu laufen beginnt, die dann mit der Vergleichszeit verglichen wird

$\alpha, c_L$     Parameter bezeichnen, mit deren Hilfe das Ausmass des Korrekturbeitrags $corr_i$ beeinflusst werden kann.

Zieht man also nach Ablauf des Intervalls $t_{act}$ (das übrigens auch null sein kann) den Korrekturbeitrag $corr_i$ von der jeweils tatsächlichen aktuellen Zeit $t_{loc}$ ab, gelangt man zu der virtuellen lokalen Zeit $t_{virt}$ , die durch die jeweilige gestrichelte Linie in Fig. 3 dargestellt ist. Mit dieser virtuellen lokalen Zeit $t_{virt}$ werden nun die aus den empfangenen Zeitnachrichten ermittelten Vergleichszeiten $t_{comp}$ verglichen.

Sobald nun die Vergleichszeit $t_{comp}$ jünger ist als die virtuelle lokale Zeit $t_{virt}$ , erfolgt eine Aktualisierung der lokalen Zeit $t_{loc}$ , und zwar vorzugsweise so, dass die lokale Zeit $t_{loc}$ am untergeordneten Knoten N2 bzw. N3 auf die Vergleichszeit $t_{comp}$ gesetzt wird, wie dies in Fig. 3 z.B. bei den Vergleichszeiten $t_{comp,3}$ und $t_{comp,7}$ der Fall ist, wo ohne den Vergleich mit der virtuellen lokalen Zeit $t_{virt}$ keine Aktualisierung der lokalen Zeit $t_{loc}$ am untergeordneten Knoten N2 bzw. N3 erfolgen würde. Die Vergleichszeit $t_{comp,5}$ ist sowohl jünger als die lokale Zeit $t_{loc}$ als auch jünger als die virtuelle lokale Zeit $t_{virt}$ , sodass hier auch alleine durch den Vergleich mit der lokalen Zeit $t_{loc}$ (also ohne den Vergleich mit der virtuellen Zeit $t_{virt}$) eine Aktualisierung der lokalen Zeit $t_{loc}$ erfolgen würde.

Die Länge des Intervalls $t_{act}$ wird vorteilhaft dynamisch unter Berücksichtigung der bereits erwähnten "Historie" (Ausmass $c_{upd}$ der letzten Aktualisierungen, Zeitintervall $\Delta t_{upd}$ zwischen zwei Aktualisierungen, Geschwindigkeiten nach den Aktualisierungen) angepasst. Das Intervall $t_{act}$ kann beispielsweise auch den Wert null annehmen, d.h. die virtuelle lokale Zeit $t_{virt}$ beginnt dann jeweils sofort zu laufen.

Wie bereits weiter oben erwähnt, ist es von Vorteil, wenn nach einer Aktualisierung der lokalen Zeit $t_{loc}$ am untergeordneten Knoten N2 bzw. N3 die Geschwindigkeit der lokalen Uhr - also die Geschwindigkeit, mit welcher die lokale Zeit $t_{loc}$ nach der Aktualisierung am untergeordneten Knoten voranschreitet - eingestellt wird, und zwar in Abhängigkeit von der Geschwindigkeit der lokalen Uhr vor dem Zeitpunkt der Aktualisierung der lokalen Zeit (in Fig. 3 entspricht die Geschwindigkeit der lokalen Uhr der Steigung des jeweiligen Abschnitts der lokalen Zeit $t_{loc}$), ferner in Abhängigkeit von dem Ausmass $C_{upd}$ der Aktualisierung, und schliesslich in Abhängigkeit von dem Zeitintervall $\Delta t_{upd}$, welches zwischen zwei Aktualisierungen verstrichen ist. Dabei können bei der Einstellung der Geschwindigkeit der lokalen Uhr durchaus die Werte dieser Grössen über einen bestimmten Zeitraum zurück mit in Betracht gezogen werden, um die Entwicklung angemessen zu berücksichtigen und somit also die "Güte" der Synchronisation zu verbessern.

Eine lokale Uhr kann dabei beispielsweise mit Hilfe eines Quarz-Oszillators realisiert sein, wobei beim Einstellen der Geschwindigkeit entweder der Quarz selbst beeinflusst werden kann oder eine in Software implementierte Uhr mitlaufen kann, in welcher die Geschwindigkeit der Uhr softwaremässig erhöht oder erniedrigt werden kann, ohne den QuarzOszillator selbst direkt zu beeinflussen.

Die Aktualisierung der lokalen Zeit am untergeordneten Knoten N2,N3 aufgrund des Vergleichs mit der Vergleichszeit kann - wie zuvor beschrieben - unmittelbar durchgeführt werden, was zu einer sprunghaften Änderung der lokalen Zeit am untergeordneten Knoten N2,N3 führt. Je nach den Erfordernissen einer nachgeschalteten Applikation kann es aber auch vorteilhaft sein, die erforderliche Aktualisierung der an die Applikation übergebene "lokale" Zeit auf eine bestimmte Zeitspanne auszudehnen, sodass die an die Applikation übergebene "lokale" Zeit einen gewünschten, beispielsweise stetigen, Verlauf erhält. Dies kann beispielsweise durch kurzfristige Änderungen der LaufGeschwindigkeit des lokalen Oszillators erreicht werden.

Das zuvor beschriebene Verfahren ist am Beispiel nur eines übergeordneten Knotens ("master") N1 erläutert. Grundsätzlich können auch mehrere, untereinander synchronisierte übergeordnete Knoten ("master") vorgesehen sein. Dies hat den Vorteil, dass ein untergeordneter Knoten ("slave") unter allen angebotenen Zeitnachrichten die jeweils besten aussuchen kann. Ausserdem kann dadurch Redundanz erreicht werden.

Wie aus Fig. 1 zu erkennen ist, kann bei einem mehrstufigen Netzwerk dem Knoten N3, der in der bisherigen Beschreibung als untergeordneter Knoten ("slave") beschrieben ist, auch die Funktion eines übergeordneten Knotens ("master") zukommen, nämlich wie in Fig. 1 ebenfalls zu erkennen ist, in Bezug auf die Knoten N4-N6, die über das (Teil-)Netzwerk NW2 mit dem Knoten N3 verbunden sind. Gleiches gilt für den Knoten N6, der einerseits ein untergeordneter Knoten sein kann in Bezug auf den Knoten N3, andererseits einen übergeordneten Knoten ("master") in Bezug auf den Knoten N7 darstellt, der über das zwischen den Knoten N6 und N7 liegende Teil-Netzwerk NW3 mit dem Knoten N6 verbunden ist.

Die Synchronisation eines als untergeordneter Knoten fungierenden Knotens, hier z.B. von einem der Knoten N4-N6, kann jeweils in Bezug auf dessen übergeordneten Knoten erfolgen, hier z.B. in Bezug auf den Knoten N3, über das dazwischen liegende Teil-Netzwerk NW2. Von einer allfälligen Synchronisation des übergeordneten Knotens - hier des Knotens N3, in Bezug auf dessen übergeordneten Knoten - hier N1, kann diese Synchronisation (der Knoten N4-N6) entkoppelt sein. Diese Art der Synchronisation soll im folgenden etwas näher erläutert werden.

Würde man die im Knoten N3 aus den vom Knoten N1 empfangenen Zeitnachrichten abgeleitete lokale Zeit am Knoten N3 (die ja - wie vorstehend beschrieben - durchaus gelegentlich aktualisiert wird) direkt als Referenz für eine Synchronisation der Knoten N4-N6 nach dem vorstehend beschriebenen Verfahren nutzen, so würde beispielsweise der Knoten N4 (im folgenden wird nur noch der Knoten N4 betrachtet, sinngemäss gelten die Betrachtungen auch für die Knoten N5,N6) nicht unterscheiden können, ob der Unterschied zwischen seiner lokalen Zeit (also der lokalen Zeit am Knoten N4) und der Vergleichszeit (die dann ja aus der lokalen Zeit am Knoten N3 direkt ermittelt würde) auf Nachrichtenlaufzeiten zurückzuführen ist - insbesondere auf Laufzeiten zwischen dem Knoten N3 und dem Knoten N4, oder auf eine Fehlsynchronisation der lokalen Uhr am Knoten N4, oder auf Aktualisierungen der lokalen Zeit am Knoten N3. Gerade eine Aktualisierung der lokalen Zeit am Knoten N3 kann dabei eine zusätzliche Unsicherheit zur Folge haben. Dadurch kann der Gesamtfehler der Synchronisation des Knotens N4 gegenüber dem "Referenz"-Knoten N1 grösser sein als die Summe der in den beiden (Teil-)Netzwerken NW1 und NW2 entstehenden einzelnen Fehler, würde man diese unabhängig voneinander betrachten.

Um eine Entkoppelung der Synchronisation des Knotens N4 in Bezug auf seinen übergeordneten Knoten N3 von der Synchronsation dieses Knotens N3 in Bezug auf dessen übergeordneten Knoten N1 zu bewirken, kann beispielsweise am Knoten N3 eine unabhängige lokale Uhr vorgesehen sein. Diese unabhängige lokale Uhr des Knotens N3 kann nach dem bereits weiter oben beschriebenen Verfahren zur Synchronisation des Knotens N4 genutzt werden, sodass die Synchronisation über das Teil-Netzwerk NW2 durch die Synchronisation über das Teil-Netzwerk NW1 nicht beeinflusst wird. Dabei wird die unabhängige lokale Uhr des Knotens N3 dann als diejenige lokale Zeit betrachtet, zu welcher die für das Teil-Netzwerk NW2 spezififische Laufzeit $d_{min}$ (siehe weiter oben) hinzu addiert wird, um am Knoten N4 die Vergleichszeit zu generieren.

Der Knoten N4 erhält somit zunächst ein "Abbild" der unabhängigen lokalen Uhr des Knotens N3. Um darüber hinaus auch ein Abbild der "Referenzzeit" am Knoten N1 zu erhalten, enthalten die vom Knoten N3 verschickten Zeitnachrichten zusätzlich zu den Momentanwerten der unabhängigen lokalen Uhr des Knotens N3 auch die momentane Differenz zwischen diesen Momentanwerten der unabhängigen lokalen Uhr am Knoten N3 und der jeweiligen (aus den Zeitnachrichten vom Knoten N1 abgeleiteten) lokalen Zeit am Knoten N3 (einschliesslich allfälliger Aktualisierungen).

Aufgrund dieser Informationen, nämlich einerseits der Informationen über die Momentanwerte der unabhängigen lokalen Uhr des Knotens N3 und andererseits der Informationen über die Differenz zwischen den Momentanwerten der unabhängigen lokalen Uhr am Knoten N3 und der jeweiligen (aus den Zeitnachrichten vom Knoten N1 abgeleiteten) lokalen Zeit am Knoten N3 ist dann der Knoten N4 in der Lage, ein "Abbild" der "Referenzzeit" am Knoten N1 zu bestimmen.

In weiteren Synchronisationsstufen - beispielsweise vom Knoten N6 über das Teil-Netzwerk NW3 zum Knoten N7 - kann dieses Verfahren so eingesetzt werden, dass die vom Knoten N6 verschickten Zeitnachrichten abermals die Momentanwerte einer unabhängigen lokalen Uhr am Knoten N6 und die jeweilige Differenz zwischen diesen Momentanwerten der unabhängigen lokalen Uhr am Knoten N6 und dem Abbild der "Referenzzeit" des Knotens N1 enthalten.

Im folgenden wird eine vorteilhafte Variante der Entkoppelung der verschiedenen Stufen der Synchronisation erläutert, welche die soeben beschriebenen zusätzlichen unabhängigen lokalen Uhren nicht benötigt. Für diese Varianten sind allerdings dann Zeitnachrichten notwendig, welche folgende drei Informationen enthalten:

1) wie bisher die aktuelle lokale Zeit am verschickenden Knoten zum Zeitpunkt des Verschickens der Zeitnachricht
2) zusätzlich die Summe aller Ausmasse an Aktualisierungen (also $\Sigma\ c_{upd}$ ) der lokalen Zeit an diesem (verschickenden) Knoten seit dem Verschicken der letzten Zeitnachricht von diesem Knoten
3) die Summe aller Anpassungen der Geschwindigkeit der lokalen Uhr seit dem Verschicken der letzten Zeitnachricht von diesem (verschickenden) Knoten.

Da die lokale Zeit am Knoten N1 hier die absolute Referenz darstellt und an dieser Zeit keine Änderungen vorgenommen werden (weder die Zeit selbst wird aktualisiert noch die Geschwindigkeit, mit der diese Zeit voranschreitet) sind die beiden letztgenannten Komponenten 2) und 3) in den Zeitnachrichten, die vom Knoten N1 an die Knoten N2 und N3 verschickt werden, immer Null.

Das weiter oben auch anhand der Fig. 2 und 3 ausführlich beschriebene Synchronisationsverfahren wird nun also wie folgt modifiziert.

Beim Empfang einer Zeitnachricht an einem untergeordneten Knoten ("slave") werden zunächst die Korrekturen der lokalen Uhr des Absenders ("master") der Zeitnachricht direkt nachvollzogen und lokal zwischengespeichert. Das heisst, dass beispielsweise am Knoten N3 keine Korrekturen der lokalen Uhr des Absenders nachvollzogen werden müssen, weil der Absender ja der Knoten N1 ist und die Zeit am Knoten N1 und die Geschwindigkeit, mit der die Zeit am Knoten N1 voranschreitet, nicht geändert werden. Hingegen wird beispielsweise am Knoten N6 ("slave") der Momentanwert der lokalen Zeit am Knoten N6 um $\Sigma\ c_{upd}$ des verschickenden Knotens N3 ("master") - also um die Summe der Ausmasse der Aktualisierungen am Knoten N3 seit dem Verschicken der letzten Zeitnachricht vom Knoten N3 - geändert. Ausserdem wird die Geschwindigkeit, mit der die lokale Zeit am Knoten N6 ("slave") voranschreitet, um die Summe aller Korrekturen der Geschwindigkeit am verschickenden Knoten N3 ("master") seit dem Verschicken der letzten Zeitnachricht vom Knoten N3 geändert.

Auf die so resultierende lokale Zeit am Knoten N6 wird das weiter oben auch anhand der Fig. 2 und Fig. 3 erläutete Verfahren angewandt. Als Vergleichszeit am Knoten N6 gilt dabei die in der Zeitnachricht vom Knoten N3 enthaltene lokale Zeit am Knoten N3 ("master") zuzüglich der für das Teil-Netzwerk NW2 spezifischen Mindetlaufzeit $d_{min}$.

Ausserdem werden die erfolgten Anpassungen sowohl der lokalen Zeit am Knoten N6 als auch der Änderung der Geschwindigkeit in den lokalen Variablen berücksichtigt. Die nächste Zeitnachricht des Knotens N6 - in seiner Funktion als übergeordneter Knoten ("master") - an den Knoten N7 über das Teil-Neztwerk N3 enthält dann als Referenzzeit die entsprechende aktuelle lokale Zeit am Knoten N6 zum Zeitpunkt des Verschickens der Zeitnachricht sowie die aktuellen Werte für die Summe aller erfolgten Ausmasse an Aktualisierungen $\Sigma\ c_{upd}$ am Knoten N6 und für die Summe aller Anpassungen der Geschwindigkeit der Zeit am Knoten N6. Nach dem Versenden einer solchen Zeitnachricht werden diese Werte wieder auf Null zurückgesetzt, weil sie ja von dem empfangenden Knoten - hier N7 - dann bereits durch den oben beschriebenen Vorgang des Nachvollziehens bereits berücksichtigt worden sind.

**Patentansprüche**

1. Verfahren zur Synchronisation in einem Netzwerk, bei welchem Verfahren an verschiedenen Knoten im Netzwerk die an dem jeweiligen Knoten gültige lokale Zeit ($t_{loc}$) aktualisiert wird, wobei von einem als übergeordneter Knoten (N1;N3;N6) fungierenden Knoten regelmässig Zeitnachrichten an einen gegenüber diesem Knoten (N1;N3;N6) als untergeordneter Knoten fungierenden Knoten (N2,N3;N4-N6;N7) gesendet werden, der die von dem übergeordneten Knoten (N1;N3;N6) ausgesandten Zeitnachrichten (M1-M8) empfängt und diese Zeitnachrichten (M1-M8) für die Aktualisierung seiner lokalen Zeit ($t_{loc}$) auswertet, wobei eine Mindestlaufzeit ($d_{min}$) für eine Zeitnachricht (M1-M8) zwischen dem übergeordneten Knoten (N1;N3;N6) und dem untergeordneten Knoten (N2,N3;N4-N6;N7) festgelegt wird, wobei ferner der untergeordnete Knoten (N2,N3;N4-N6;N7) beim Empfang der Zeitnachricht (M1-M8) die in der vom übergeordneten Knoten (N1;N3;N6) gesendeten Zeitnachricht (M1-M8) enthaltene lokale Zeit des übergeordneten Knotens (N1;N3;N6) ausliest und zu dieser lokalen Zeit des übergeordneten Knotens (N1;N3;N6) die festgelegte Mindestlaufzeit hinzu addiert und somit eine Vergleichszeit ($t_{comp,1}$-$t_{comp,8}$) generiert, und wobei die auf diese Weise generierte Vergleichszeit ($t_{comp,1}$-$t_{comp,8}$) dann mit der eigenen lokalen Zeit ($t_{loc}$) verglichen wird und in demjenigen Falle, in welchem die Vergleichszeit ($t_{comp,1}$, $t_{comp,2}$ , $t_{comp,4}$, $t_{comp,6}$, $t_{comp,8}$) älter ist als die eigene lokale Zeit ($t_{loc}$) keine Aktualisierung der eigenen lokalen Zeit ($t_{loc}$) erfolgt, hingegen in demjenigen Falle, in welchem die Vergleichszeit ($t_{comp,5}$) jünger ist als die eigene lokale Zeit ($t_{loc}$), eine Aktualisierung ($c_{upd}$) der eigenen lokalen Zeit ($t_{loc}$) erfolgt, im Netzwerk stets festgelegt ist, **dadurch gekennzeichnet, dass** welcher Knoten jeweils als übergeordneter Knoten (NZ;N3;N6) fungiert und nur ein solcher als übergeordneter Knoten (N1;N3;N6) fungierender Knoten Zeitnachrichten (M1-M8) verschickt, wobei bei der Festlegung frei wählbar ist, welcher Knoten gegenüber welchem Knoten als übergeordneter Knoten (N1;N3;N6) fungiert.

2. Verfahren nach Anspruch 1, bei welchem die Aktualisierung ($C_{upd}$) der eigenen lokalen Zeit ($t_{loc}$) derart erfolgt, dass die eigene lokale Zeit ($t_{loc}$) auf die Vergleichszeit ($t_{comp,3}$, $t_{comp,5}$, $t_{comp,7}$) eingestellt wird.

3. Verfahren nach einem der vorangehenden Ansprüche, bei welchem die Mindestlaufzeit einer Zeitnachricht (M1-M8) zwischen einem übergeordneten Knoten (N1;N3;N6) und einem gegenüber diesem Knoten (N1;N3;N6) untergeordneten Knoten (N2,N3;N4-N6;N7) entweder vorgegeben wird oder durch eine Laufzeitmessung am Beginn des Verfahrens oder durch eine Laufzeitmessung während des Verfahrens ermittelt wird.

4. Verfahren nach einem der vorangehenden Ansprüche, bei welchem an jedem Knoten eine eigene lokale Uhr vorgesehen ist, wobei die Geschwindigkeit der lokalen Uhr an einem untergeordneten Knoten (N2,N3;N4-N6;N7) langsamer ist als die Geschwindigkeit der lokalen Uhr an einem gegenüber diesem Knoten (N2,N3;N4-N6;N7) übergeordneten Knoten (N1;N3;N6).

5. Verfahren nach Anspruch 4, bei welchem die Geschwindigkeit der lokalen Uhr an einem untergeordneten Knoten (N2,N3;N4-N6;N7) einstellbar ist und bei welchem nach einer erfolgten Aktualisierung ($c_{upd}$) der lokalen Zeit ($t_{loc}$) an einem untergeordneten Knoten (N2,N3;N4-N6;N7) die Geschwindigkeit der lokalen Uhr an diesem untergeordneten Knoten (N2,N3;N4-N6;N7) eingestellt wird, und zwar in Abhängigkeit von der Geschwindigkeit der lokalen Uhr vor dem Zeitpunkt ($t_{upd}$) der Aktualisierung der lokalen Zeit ($t_{loc}$), in Abhängigkeit von dem Ausmass ($C_{upd}$) der Aktualisierung der lokalen Zeit ($t_{loc}$), und schliesslich optional in Abhängigkeit von dem Zeitintervall ($\Delta t_{upd}$), welches zwischen zwei Aktualisierungen der lokalen Zeit ($t_{loc}$) verstrichen ist.

6. Verfahren nach einem der vorangehenden Ansprüche, bei welchem Verfahren an einem untergeordneten Knoten (N2,N3;N4-N6;N7) ein vorgebbares Zeitintervall ($t_{act}$) überwacht wird, welches von dem Zeitpunkt ($t_{upd}$) an beginnt, zu welchem die letzte Aktualisierung ($c_{upd}$) der lokalen Zeit ($t_{loc}$) des untergeordneten Knotens (N2,N3;N4-N6;N7) erfolgt ist, und dass für den Fall, dass dieses Zeitintervall ($t_{act}$) überschritten ist, ohne dass eine Aktualisierung ($c_{upd}$) der lokalen Zeit ($t_{loc}$) am untergeordneten Knoten (N2,N3;N4-N6;N7) erfolgt, eine virtuelle lokale Zeit ($t_{virt}$) am untergeordneten Knoten (N2,N3;N4-N6;N7) erzeugt wird, welche der tatsächlichen lokalen Zeit ($t_{loc}$) am untergeordneten Knoten (N2,N3;N4-N6;N7) hinterher eilt, und dass dann, wenn die Vergleichszeit ($t_{comp,3}$, $t_{comp,5}$, $t_{comp,7}$) jünger ist als die erzeugte virtuelle lokale Zeit ($t_{virt}$) am untergeordneten Knoten (N2,N3;N4-N6;N7), eine Aktualisierung ($c_{upd}$) der lokalen Zeit ($t_{loc}$) erfolgt.

7. Verfahren nach einem der Ansprüche 1 bis 6, bei welchem das Netzwerk mehrstufig ausgebildet ist, also mehrere Teil-Netzwerke (NW1,NW2,NW3) umfasst, über die die Knoten (N1-N7) miteinander verbunden sind, und bei welchem die Teil-Netzwerke (NW1,NW2,NW3) jeweils über einen Knoten (N3,N6) miteinander verbunden sind, wobei im Netzwerk einzelne Knoten (N1) nur als übergeordnete Knoten fungieren können, andere Knoten (N2;N4,N5;N7) nur als untergeordnete Knoten fungieren können, und wieder andere Knoten (N3;N6) sowohl als übergeordnete Knoten als auch als untergeordnete Knoten fungieren können, und wobei die Synchronisation eines als untergeordneter Knoten (N3;N4,N5,N6;N7) fungierenden Knotens jeweils in Bezug auf seinen im Teil-Netzwerk übergeordneten Knoten (N1;N3;N6) über das dazwischen liegende Teil-Netzwerk (NW1;NW2;NW3) erfolgt, jedoch von einer allfälligen Synchronisation des in diesem Teil-Netzwerk übergeordneten Knotens (N3;N6) in Bezug auf dessen übergeordneten Knoten (N1;N3) entkoppelt ist.

8. Verfahren nach Anspruch 7, bei welchem an einem Knoten (N3), der sowohl als übergeordneter Knoten wie auch als untergeordneter Knoten fungiert, eine unabhängige lokale Uhr vorgesehen ist, und bei welchem Verfahren beim Verschicken einer Zeitnachricht dieses Knotens (N3) an einen untergeordneten Knoten (N4) sowohl der Momentanwert dieser unabhängigen lokalen Uhr als auch die Differenz zwischen dem Momentanwert dieser unabhängigen lokalen Uhr und der von seinem übergeordneten Knoten (N1) abgeleiteten lokalen Zeit ($t_{loc}$) verschickt wird, wobei am untergeordneten Knoten (N4) beim Empfang einer solchen Zeitnachricht einerseits aus dem in der Zeitnachricht enthaltenen Momentanwert der unabhängigen lokalen Uhr die Vergleichszeit ($t_{comp}$) und andererseits aus der Differenz zwischen dem Momentanwert dieser unabhängigen lokalen Uhr und der von seinem übergeordneten Knoten (N1) abgeleiteten lokalen Zeit ($t_{loc}$) ein Abbild der Referenzzeit des übergeordneten Knotens (N1) generiert wird.

**9.** Verfahren nach Anspruch 7, bei welchem Verfahren beim Verschicken einer Zeitnachricht von einem übergeordneten Knoten (N1;N3) an einen untergeordneten Knoten (N3;N6) sowohl die Summe aller Ausmasse ($c_{upd}$) an Aktualisierungen seit dem Verschicken der letzten Zeitnachricht verschickt wird als auch die Summe aller seit dem Verschicken der letzten Zeitnachricht erfolgten Korrekturen der Geschwindigkeit, mit der die Zeit voranschreitet, und bei welchem Verfahren beim Empfang einer Zeitnachricht von einem übergeordneten Knoten (N1;N3) am untergeordneten Knoten zunächst die lokale Zeit des untergeordneten Knotens (N3;N6) um die in der Zeitnachricht enthaltene Summe aller Ausmasse ($C_{upd}$) an Aktualisierungen geändert wird und ausserdem die Geschwindigkeit, mit der die Zeit des untergeordneten Knotens (N3;N6) voranschreitet, um die in der Zeitnachricht enthaltene Summe aller Geschwindigkeitskorrekturen geändert wird, bevor am untergeordneten Knoten (N3;N6) die Vergleichszeit ($t_{comp}$) generiert wird.

**Revendications**

**1.** Procédé de synchronisation dans un réseau, dans lequel procédé l'heure locale ($t_{loc}$) respectivement en vigueur sur le noeud respectif est mise à jour sur différents noeuds, des informations horaires étant régulièrement envoyées à partir d'un noeud faisant office de noeud directeur (N1 ;N3 ;N6) vers un noeud faisant office de noeud subordonné (N2,N3 ;N4-N6 ;N7) par rapport à ce noeud (N1 ;N3 ; N6), qui réceptionne ces informations horaires (M1- M8) envoyées par le noeud directeur (N1 ;N3 ;N6) et évalue lesdites informations horaires (M1-M8) pour la mise à jour de son heure locale ($t_{loc}$), une durée d'exécution minimale ($d_{min}$) pour une information horaire (M1-M8) entre le noeud directeur (N1 ;N3 ;N6) et le noeud subordonné (N2,N3 ;N4-N6 ;N7) étant déterminée par ailleurs, lors de la réception de l'information horaire (M1-M8) le noeud subordonné (N2,N3 ;N4-N6 ;N7) lisant l'heure locale du noeud directeur (N1 ;N3 ;N6) contenue dans l'information horaire (M1-M8) envoyée par le noeud directeur (N1 ;N3 ;N6) et additionnant avec cette heure locale du noeud directeur (N1 ;N3 ;N6) la durée d'exécution déterminée et générant de ce fait une heure de comparaison ($t_{comp,1}$ - $t_{comp,8}$) et l'heure de comparaison générée de cette façon ($t_{comp,1}$ - $t_{comp,8}$) étant ensuite comparée avec la propre heure locale ($t_{loc}$) et dans le cas où l'heure de comparaison ($t_{comp,1}$, $t_{comp,2}$, $t_{comp,4}$, $t_{comp,6}$, $t_{comp,8}$) est plus ancienne que la propre heure locale ($t_{loc}$), aucune mise à jour de la propre heure locale ($t_{loc}$) n'est effectuée, alors que dans le cas où l'heure de comparaison ($t_{comp,5}$) est plus récente que la propre heure locale ($t_{loc}$), une mise à jour ($C_{upd}$) de la propre heure locale ($t_{loc}$) est effectuée, **caractérisé en ce qu'**il est toujours déterminé dans le réseau quel est le noeud qui fait respectivement office de noeud directeur (N1 ; N3 ;N6) et **en ce que** seul un noeud de ce type faisant office de noeud directeur (N1 ;N3 ;N6) envoie des informations horaires (M1-M8), dans lequel cas, lors de la détermination, on peut choisir librement quel noeud fait office de noeud directeur (N1 ;N3 ;N6) par rapport à quel autre noeud.

**2.** Procédé selon la revendication 1, dans lequel la mise à jour ($C_{upd}$) de la propre heure locale ($t_{loc}$) est effectuée par réglage de la propre heure locale ($t_{loc}$) sur l'heure de comparaison ($t_{comp,3}$, $t_{comp,5}$, $t_{comp,7}$).

**3.** Procédé selon l'une quelconque des revendications précédentes, dans lequel la durée d'exécution minimale d'une information horaire (M1-M8) entre un noeud directeur (N1 ;N3 ;N6) et un noeud subordonné (N2 ,N3 ;N4-N6 ;N7) par rapport à ce noeud (N1 ;N3 ;N6) est soit prédéfinie ou déterminée par une mesure de la durée d'exécution au début du procédé ou par une mesure de la durée d'exécution pendant le procédé.

**4.** Procédé selon l'une quelconque des revendications précédentes, dans lequel une horloge locale est prévue sur chaque noeud, la vitesse de l'horloge locale sur un noeud subordonné (N2 ,N3 ;N4-N6 ;N7) étant plus lente que la vitesse de l'horloge locale sur un noeud directeur (N1 ;N3 ;N6) par rapport à ce noeud (N2 ,N3 ;N4-N6 ;N7).

**5.** Procédé selon la revendication 4, dans lequel la vitesse de l'horloge locale sur un noeud subordonné (N2 ,N3 ;N4-N6 ;N7) est réglable et dans lequel, après une mise à jour ($C_{upd}$) de l'heure locale ($t_{loc}$) effectuée sur un noeud subordonné (N2 ,N3 ; N4-N6 ;N7), la vitesse de l'horloge locale est réglée sur ledit noeud subordonné (N2 ,N3 ;N4-N6 ;N7), à savoir en fonction de la vitesse de l'horloge locale, avant le moment ($t_{upd}$) de mise à jour de l'heure locale ($t_{loc}$), en fonction de la dimension ($c_{upd}$) de la mise à jour de l'heure locale ($t_{loc}$) et finalement en option, en fonction de l'intervalle de temps ($\Delta t_{upd}$) qui s'est écoulé entre deux mises à jour de l'heure locale ($t_{loc}$).

**6.** Procédé selon l'une quelconque des revendications précédentes, dans lequel procédé un intervalle de temps prédéfinissable ($t_{act}$) qui démarre au moment ($t_{upd}$) auquel la dernière mise à jour ($c_{upd}$) de l'heure locale ($t_{loc}$) du noeud subordonné (N2,N3;N4-N6;N7) a été effectuée est surveillé sur un noeud subordonné (N2 ,N3 ;N4-N6 ;N7) et dans le cas où cet intervalle de temps ($t_{act}$) est dépassé, sans qu'une mise à jour ($c_{upd}$) de l'heure locale ($t_{loc}$) ne soit effectuée sur le noeud subordonné (N2 ,N3 ;N4-N6 ;N7), une heure locale virtuelle ($t_{virt}$) qui est en retard sur l'heure locale effective ($t_{loc}$) sur le noeud subordonné (N2 ,N3 ;N4-N6 ;N7) est générée sur le noeud subordonné (N2 ,N3 ; N4-N6 ;N7) et lorsque l'heure de comparaison ($t_{comp,3}$ , $t_{comp,5}$ , $t_{comp,7}$) est plus récente que l'heure virtuelle générée ($t_{virt}$), une mise à jour ($C_{upd}$) de l'heure locale ($t_{loc}$) est effectuée sur le noeud subordonné (N2 ,N3 ;N4-N6 ;N7).

**7.** Procédé selon l'une quelconque des revendications 1 à 6, dans lequel le réseau est conçu à étages multiples, et comprend donc plusieurs réseaux partiels (NW1,NW2,NW3), par l'intermédiaire desquels les noeuds (N1-N7) sont reliés entre eux, et dans lequel les réseaux partiels (NW1,NW2,NW3) sont à chaque fois reliés entre eux par un noeud (N3, N6), des noeuds individuels (N1) pouvant uniquement faire office de noeuds directeurs, d'autres noeuds (N2 ;N4 ;N5 ;N7) pouvant uniquement faire office de noeuds subordonnés et encore d'autres noeuds (N3 ;N6) pouvant faire office aussi bien de noeuds directeurs que de noeuds subordonnés dans le réseau et la synchronisation d'un noeud faisant office de noeud subordonné (N3 ;N4,N5,N6 ;N7) étant effectuée respectivement par rapport à son noeud directeur (N1 ;N3 ;N6) dans le réseau partiel, par l'intermédiaire du réseau partiel intermédiaire (NW1; NW2;NW3), tout en étant toutefois découplée d'une synchronisation éventuelle du noeud directeur (N3 ;N6) dans ce réseau partiel par rapport à son noeud directeur (N1 ;N3).

**8.** Procédé selon la revendication 7, dans lequel sur un noeud (N3) faisant office aussi bien de noeud directeur que de noeud subordonné, on a prévu une horloge locale indépendante et dans lequel procédé, lors de l'envoi d'une information horaire par ce noeud (N3) à un noeud subordonné (N4), aussi bien la valeur instantanée de cette horloge locale indépendante, que la différence entre la valeur instantanée de ladite horloge locale indépendante et l'heure locale ($t_{loc}$) déduite de son noeud directeur (N1) étant envoyées, lors de la réception d'une information horaire de ce type, d'une part l'heure de comparaison ($t_{comp}$) étant générée à partir de la valeur instantanée de l'horloge locale indépendante contenue dans l'information horaire et d'autre part une reproduction de l'heure de référence du noeud directeur (N1) étant générée à partir de la différence entre la valeur instantanée de ladite horloge locale indépendant et l'heure locale ($t_{loc}$) déduite de son noeud directeur (N1), sur un noeud subordonné (N4).

**9.** Procédé selon la revendication 7, dans lequel procédé, lors de l'envoi d'une information horaire d'un noeud directeur (N1 ;N3) à un noeud subordonné (N3 ;N6), aussi bien la somme de toutes les dimensions ($c_{upd}$) des mises à jours depuis l'envoi de la dernière information horaire, qu'également la somme de toutes les corrections de la vitesse à laquelle l'heure est en avance qui ont été effectuées depuis l'envoi de la dernière information horaire sont envoyées et dans lequel procédé, lors de la réception d'une information horaire en provenance d'un noeud directeur (N1 ;N3) sur le noeud subordonné, d'abord l'heure locale du noeud subordonné (N3 N6) est modifiée de la valeur de la somme de toutes les dimensions ($C_{upd}$) des mises à jour qui est contenue dans l'information horaire et par ailleurs, la vitesse à laquelle l'heure du noeud subordonné (N3 ;N6) est en avance est modifiée de la valeur de la somme de toutes les corrections de vitesse qui est contenue dans l'information horaire, avant que l'heure de comparaison ($t_{comp}$) ne soit générée sur le noeud subordonné (N3 ;N6).

**Claims**

**1.** A method for synchronization in a network, in which method the local time ($t_{loc}$) at the respective node is updated at various nodes in the network, with time messages being sent regularly from a node which acts as a higher-level node (N1; N3; N6) to a node (N2, N3; N4-N6; N7) which acts as a node at a lower level than this node (N1; N3; N6) and which receives time messages (M1-M8) which are transmitted from the higher-level node (N1; N3; N6), and evaluates these time messages (M1-M8) in order to update its local time ($t_{loc}$) with a minimum delay time ($d_{min}$) being defined for a time message (M1-M8) between the higher-level node (N1; N3; N6) and the lower-level node (N2, N3; N4-N6; N7), furthermore on reception of the time message (M1-M8), with the lower-level node (N2, N3; N4-N6; N7) reading the local time of the higher-level node (N1; N3; N6) which is contained in the time message (M1-M8) sent from the higher-level node (N1; N3; N6), and adding the defined minimum delay time to this local time of the higher-level node (N1; N3; N6), and thus generating a comparison time ($t_{comp,1}$-$t_{comp,8}$), and with the comparison time ($t_{comp,1}$-$t_{comp,8}$) which is generated in this way then being compared with the node's own local time ($t_{loc}$) and, with the node's own local time ($t_{loc}$) not being updated if the comparison time ($t_{comp,1}$, $t_{comp,2}$, $t_{comp,4}$, $t_{comp,6}$, $t_{comp,8}$) is older than the node's own local time ($t_{loc}$) while, in contrast, in those situations in which the comparison time ($t_{comp,5}$) is newer than the node's own local time ($t_{loc}$), the node's own local time ($t_{loc}$) is updated ($C_{upd}$), **characterised in that** the network always knows which node is in each case acting as a higher-level node (N1; N3; N6) and only a node such as this which is acting as a higher-level node (N1; N3; N6) sends time messages (M1-M8), and in which case there is no restriction on which node will act as the higher-level node (N1; N3; N6) for which other node.

2. The method as claimed in claim 1, in which the node's own local time ($t_{loc}$) is updated in such a way that the node's own local time ($t_{loc}$) is set to the comparison time ($t_{comp,3}$, $t_{comp,5}$, $t_{comp,7}$).

3. The method as claimed in any one of the preceding claims, in which the minimum delay time of a time message (M1-M8) between a higher-level node (N1; N3; N6) and a node (N2, N3; N4-N6; N7) which is at a lower level than this node (N1; N3; N6) is either predetermined or is determined by a delay time measurement at the start of the method or by a delay time measurement during the method.

4. The method as claimed in any one of the preceding claims, in which an own local clock is provided at each node, with the speed of the local clock at a lower-level node (N2, N3; N4-N6; N7) being slower than the speed of the local clock at a node (N1; N3; N6) which is at a higher level than this node (N2, N3; N4-N6; N7).

5. The method as claimed in claim 4, in which the speed of the local clock at a lower-level node (N2, N3; N4-N6; N7) can be adjusted, and in which, after each update ($C_{upd}$) of the local time ($t_{loc}$) at a lower-level node (N2, N3; N4-N6; N7), the speed of the local clock at this lower-level node (N2, N3; N4-N6; N7) is adjusted, to be precise as a function of the speed of the local clock before the time ($t_{upd}$) of the update of the local time ($t_{loc}$), as a function of the extent ($c_{upd}$) of the update to the local time ($t_{loc}$) and, finally and optionally, as a function of the time interval ($\Delta t_{upd}$) which has passed between two updates of the local time ($t_{loc}$).

6. The method as claimed in any one of the preceding claims, in which method a time interval ($t_{act}$) which can be predetermined is monitored at a lower-level node (N2, N3; N4-N6; N7), which time interval ($t_{act}$) starts from the time ($t_{upd}$) at which the last update ($C_{upd}$) to the local time ($t_{loc}$) of the lower-level node (N2, N3; N4-N6; N7) took place, and in that in the situation where this time interval ($t_{act}$) is exceeded without the local time ($t_{loc}$) at the lower-level node (N2, N3; N4-N6; N7) being updated ($C_{upd}$), a virtual local time ($t_{virt}$) is produced at the lower-level node (N2, N3; N4-N6; N7) which lags behind the actual local time ($t_{loc}$) at the lower-level node (N2, N3; N4-N6; N7), and in that, if the comparison time ($t_{comp,3}$, $t_{comp,5}$, $t_{comp,7}$) is more recent than the virtual local time ($t_{virt}$) which has been produced at the lower-level node (N2, N3; N4-N6; N7), the local time ($t_{loc}$) is updated ($c_{upd}$).

7. The method as claimed in any one of claims 1 to 6, in which the network has a number of stages, that is to say it has two or more network elements (NW1, NW2, NW3) via which the nodes (N1-N7) are connected to one another, and in which the network elements (NW1, NW2, NW3) are each connected to one another via a node (N3, N6) with individual nodes (N1) in the network being able to act only as higher-level nodes, while other nodes (N2; N4; N5; N7) can act only as lower-level nodes, and, once again, with other nodes (N3; N6) being able to act both as higher-level nodes and as lower-level nodes, and with the synchronization of a node acting as a lower-level node (N3; N4, N5, N6; N7) in each case being carried out with respect to its node (N1; N3; N6) which is at a higher level in the network element, via the intermediate network element (NW1; NW2; NW3) but being decoupled from any synchronization of the node (N3; N6) which is at a higher level in this network element with respect to that node's higher-level node (N1; N3).

8. The method as claimed in claim 7, in which an independent local clock is provided at a node (N3) which acts both as a higher-level node and as a lower-level node, and in which method, when a time message is sent from this node (N3) to a lower-level node (N4), both the instantaneous value of this independent local clock and the difference between the instantaneous value of this independent local clock and the local time ($t_{loc}$) derived from its higher-level node (N1) are sent, and with, on reception of a time message such as this, on the one hand the comparison time ($t_{comp}$) being generated from the instantaneous value of the independent local clock contained in the time message and, on the other hand a map of the reference time of the higher-level node (N1) being derived from the difference between the instantaneous value of this independent local clock and the local time ($t_{loc}$) derived from its higher-level node (N1), at the lower-level node (N4).

9. The method as claimed in claim 7, in which method, when a time message is sent from a higher-level node (N1; N3) to a lower-level node (N3; N6), both the sum of all the extents ($C_{upd}$) of the updates since the sending of the last time message sent as well as the sum of all the corrections made since the sending of the last message to the speed at which the time passes are sent, and in which method, on reception of a time message from a higher-level node (N1; N3) at the lower-level node, the local time of the lower-level node (N3; N6) is first of all changed by the sum of all the extents ($C_{upd}$) of updates contained in the time message and, furthermore, the speed at which time passes in the lower-level node (N3; N6), is changed by the sum of all the speed corrections contained in the time message, and that before the comparison time ($t_{comp}$) is generated at the lower-level node (N3; N6).

Fig. 1

Fig. 2

Fig. 3